(19) Europäisches Patentamt
European Patent Office
Office européen des brevets

(11) **EP 4 752 619 A1**

(12) **EUROPEAN PATENT APPLICATION**

(43) Date of publication:
**03.06.2026 Bulletin 2026/23**

(21) Application number: **24216503.3**

(22) Date of filing: **29.11.2024**

(51) International Patent Classification (IPC):
*G02B 19/00* (2006.01)    *F21S 41/143* (2018.01)
*F21S 41/20* (2018.01)    *G02B 27/12* (2006.01)

(52) Cooperative Patent Classification (CPC):
**G02B 19/0014; F21S 41/143; F21S 41/285;
F21S 41/663; G02B 19/0061; G02B 27/123**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **OPmobility Lighting Germany GmbH
80807 München (DE)**

(72) Inventor: **TKOCZ, Konrad
742 42  enov u Nového Jicína (CZ)**

(74) Representative: **LLR
2, rue Jean Lantier
75001 Paris (FR)**

(54) **LENS OF A LED SOURCED VEHICLE LAMP**

(57)    A beam splitter lens (1) for the production of a multi-beam emitter, the beam splitter lens comprising at least two simple lenses (3a, 3b, 3c, 3d), each simple lens being able to project a collimated beam (23a, 23b, 23c, 23d) from light captured at a focal point defined by the configuration of the lens,

Each simple lens is configured so that it possesses its own individual focal point (4a, 4b, 4c, 4d), which is distinct from the focal point of another lens.

Fig. 1

## Description

## Technical field

The present invention relates generally to the field of vehicle lighting systems, and more particularly to techniques for producing beams for headlamps.

## Background art

In road illumination devices, a spread function performed by a lens is commonly used. For the signalling functions, the spread function and defocus function of the lens are used to improve lamp homogeneity.

Among the existing solutions, none takes advantage of the surface character of the light source, when applicable, compared with a point light source.

Indeed, Light Emitting Diodes (LEDs) show a light emitting surface that is usually considered to be punctual.

The inventor wants to take benefit from the fact that LEDs are not point-like. Conversely, LEDs have a light emitting surface, usually a square or rectangular emitting surface. In addition, emerging matrix technology provides light sources composed of a matrix of LEDs, also providing a surface light source by definition.

Therefore, according to the inventor, it is worth considering a surface light source to feed a beam splitter and obtain multiple high-quality beams from this one light source.

US8007154B2 discloses a vehicle lamp including four LEDs as light sources and four parabolic reflectors. The lamp includes a lens having a plurality of cut portions configured to diffuse the light beam emitted from the light sources via the parabolic reflectors. The incident surface of the lens is convexly shaped. In one embodiment, the lens includes four cut portions that diffuse the light beam coming from the four light sources via the parabolic reflectors. Rays emitted by the LEDs are made parallel by the parabolic reflectors before they reach the lens. At the exit of the lens, the rays diverge for an intended increased diffusion of light. This known solution cannot be used to produce the beams of a headlamp because such beams must be collimated. Moreover, the arrangement of LEDs and parabolic mirrors is rather cumbersome.

In addition, in US8007154B2, the LEDs are not arranged so as to form a surface light source, nor as a matrix of LEDs. Accordingly, this prior art document is not helpful in making progress in the promising matrix technology.

## Technical problem

Obtaining a collimated beam distribution, in particular for a headlamp with constraints regarding its kink beam and high beam functions, requires using several central lenses and several light sources, thus leading to a quite cumbersome headlamp housing that prevents integration in so-called "ultra slim line" modules.

Actually, there is a need for solutions of matrix projectors whose height does not exceed a certain dimension, e.g. 10 mm.

## Invention

One object of the invention is a beam splitter lens for the production of a multi-beam emitter, the beam splitter lens comprising at least two simple lenses, each simple lens being able to project a collimated beam from light captured at a corresponding focal point - hereinafter referred to as individual focal point - defined by the configuration of the lens.

According to the invention, each simple lens, which is an element of the beam splitter lens, is configured so that it possesses its own individual focal point, which is distinct from the individual focal point of another lens.

One important feature of the invention is the simple lenses of the beam splitter lens do not share the same individual focal point.

According to the invention, each simple lens is configured so that its individual focal point is distinct from the individual focal point of another simple lens of the beam splitter lens, in the sense that adjacent individual focal points are distant by a minimal distance.

The beam splitter lens of the invention is an optical element that replaces the commonly used central lens of a LED Collimator. It allows for precise control of the collimated beam, which can make it an integral part of an LED collimator used in the design of matrix projectors. This collimator can be the primary optics in an ultra slim headlamps module.

The invention brings the technical effect that thanks to the distinct individual focal points, each simple lens projects its own beam ahead without interference from neighboring lenses. The minimal distance between two individual focal points is a key aspect of ensuring optimal performance and minimizing interference noise among adjacent lenses' beams.

The minimal distance between individual focal points may vary depending on factors like wavelength, beam angle, and desired system performance characteristics; for example, in visible light applications around 550-650 nm, this distance might be 1,5 mm.

In a preferred embodiment, the minimal distance between individual focal points is greater than or equal to one dimension of the size of the emitting surface. For instance, when using surface-emitting LEDs (SELEDs) with emitting surfaces having dimensions in the range of 0.5 to 3.0 mm, the minimal distance between focus points may be configured at around 25% times this value, typically within a range of 25% to 500%.

In a preferred embodiment, the individual focal points of each simple lens may be adjusted depending on specific application requirements, with larger distances allowing more flexibility in designing the beam splitter lens configuration but potentially increasing overall size and complexity. In general, a distance range from tenths to tens of millimeters is suitable for visible light applications around 550-650 nm wavelength.

In a preferred embodiment, for example, when designing beam splitter lenses using SELEDs with emitting surfaces having dimensions approximately equal to 1.5 mm in length and width (i.e., rectangular shape), the minimal distance between focus points may be set at around 2.0 mm. This allows sufficient separation of adjacent beams while maintaining a compact design suitable for the road illumination application.

In a particular embodiment, a formula could be used for determining the distance. Said formula could be:

$$[Formula 1]$$
$$d_y = SeparationCoeficient_y \times L_y$$
$$d_z = SeparationCoeficient_z \times L_z$$

where:

$d_y$, respectively $d_z$, is the distance between the individual focal point and the source focal point in dimension Y, respectively Z, expressed in mm;

$SeparationCoeficient_y$, respectively $SeparationCoeficient_z$ is the scaling factor for dimensions Y, respectively Z, expressed in %;

$L_y$, respectively $L_z$, is the size of the light-emitting surface in dimension Y, respectively Z, expressed in mm.

In a particular embodiment, each simple lens is designed such that its individual focal point falls outside the emitting surface, allowing for optimized reduction of interferences.

According to particular embodiments, the beam splitter lens comprises two or four simple lenses with non-symmetrical properties adapted to the production of a collimated beam.

In a particular embodiment, at least one of the simple lenses has a face of an aspherical shape having at least one vertex, with said vertex of the aspherical shape located on the face of the simple lens. For example, the aspherical shape can be selected among the following list: hyperbolic, parabolic and elliptical surfaces

Preferably, when the number of vertices is greater or equal to four, all vertices lie on a same planar surface.

The invention assumes that the number of vertices of beam splitter lens, located on a surface being configured to receive light emitted from the LED, is equal the number of simple lenses, being components of beam splitter lens.

The invention advantages in comparison to the classic single focal point lens soare:

a) increasing the efficiency of illumination from 190% to 370% in projectors system,

b) taking into account the dimensions of the real light sources. The LED source size and the LED chip size (not considered as point-like) and thus to reduce sensitivity to LED position,

c) possibly obtaining two or more divergent collimated beams,

d) possibly controlling individually the divergent beams by appropriate design of the appropriate simple lens,

e) reducing optical noise of the system - interference of adjacent beams - due to separation of individual focal points.

In a particular embodiment, adjacent beams diverge by an angular spread between ranges from 2-25 degrees, allowing for non-overlapping and efficient light distribution.

In a further embodiment, specialized coatings may be applied on specific wavelengths for enhanced performance. For instance, UV protection coating may enhance the LED chip's efficiency while anti-reflection coatings reduce losses due to internal reflections within the compound lens system. The emitting surface material is preferably chosen from high-luminous efficacy and low spectral variation LEDs such as SELEDs. The choice of material used to construct each simple lens may vary depending on factors such as cost-effectiveness and compatibility with other components. In general, glass materials like BK7 are suitable options due to their refractive indices and optical properties. Other suitable materials are polycarbonate, polymethyl methacrylate, polyethylene terephthalate, polymethyl methacrylimide, liquid silicon rubber.

Some of the benefits of the beam slitter lens according to the invention are:

a) to obtain 4 or 2 collimated beams of light from only one LED,

b) to enable addressability for a quarter beam splitter,

c) to make possible an asymmetrical spread,

d) to provide a homogenous illumination - in particular, a rectangular light distribution.

In manufacturing, tolerances are taken into account through design margins during assembly production; factors like curvature tolerance ($\pm 1$-5% nominal value) and centring error deviation from ideal position (100-500 $\mu$m). The individual focal points may be adjusted to optimize beam quality depending on specific application requirements. For instance, in automotive applications requiring high accuracy and precision.

Thanks to the invention, manufacturing tolerances of each component part (e.g., lens curvature tolerance $\pm 1$-5% of nominal value) may be taken into account by designing sufficient margins during production assembly; centering error deviation from ideal position 100-500 μm.

Regarding the type of LED that can be preferably used in combination with the beam splitter lens of the invention, the compound lens may be designed using different LED technologies with high luminous efficacy and low spectral variation, such as SELEDs or micro-lens arrays on the emitting surface.

In one embodiment, a surface-emitting LED (SELED) is used as the light source, comprising an emitting surface that faces towards simple lenses designed with angular spread ranges between 2-25 degrees for optimal overlap reduction and minimal noise generation.

Another embodiment employs micro-lens arrays or diffractive optics on the SELED chip to optimize aberrations and collimation efficiency while maintaining a compact design suitable for industrial applications such as vehicle headlamps producing rectangular compound beams.

**Brief description of drawings**

In order to facilitate understanding of the invention, several embodiments will now be described using the following figures. None of these embodiments should be construed as limiting the scope of protection. Where features of one embodiment can obviously be combined with features of another embodiment, the combination is also implicitly part of this description.

In the attached drawings:

[Fig. 1] is a perspective view of the coupling face of a beam splitter lens according to a first embodiment of the invention,

[Fig. 2] is a front view of the beam splitter lens of [Fig. 1],

[Fig. 3] is a perspective view of a light source and the coupling face of [Fig. 1],

[Fig. 4] is a close-up view of [Fig. 3],

[Fig. 5] shows a back-tracing of the beam splitter lens of [Fig. 1],

[Fig. 6] is a picture showing a luminance intensity distribution of the beam splitter lens, [Fig. 7] is a picture showing a luminance intensity distribution that can be achieved with individually addressed quarters of the light source,

[Fig. 8] is a picture showing the luminance intensity distribution that can be achieved with all the beams concentrated,

[Fig. 9] is a picture showing the luminance intensity distribution that can be achieved with asymmetrically spread beams,

[Fig. 10] shows the coupling face of a beam splitter lens according to a second embodiment of the invention,

[Fig. 11] shows a back-tracing of the beam splitter lens of [Fig. 10].

The general principle of constructing the beam splitter lens of the invention is to determine the position of the vertices of the individual focal points of each simple lens.

On the figures, a beam splitter lens 1, made of polyethylene terephtalate, has a coupling face 3 intended to receive light rays coming from a local light source. Coupling face 3 is divided into four quarters 3a, 3b, 3c, 3d. A central axis 5 of the beam splitter lens 1 lies at the intersection of the boundaries 7 of the quarters. In the vicinity of central axis 5, each quarter 3a, 3b, 3c, 3d has a vertex 9a, 9b, 9c, 9d.

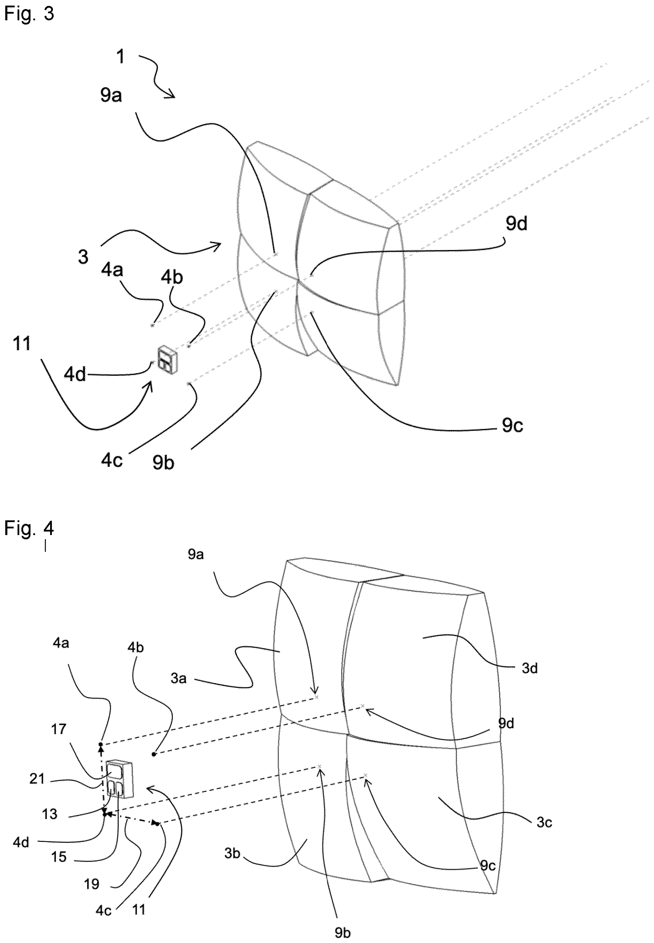

The shape of each simple lens in each quarter is defined by optic features depending on the position of the light source. As show in figures. 3 and 4, said light source is a LED 11 assembled on a chip with an anode bond pad 13, a cathode bond pad 15, a thermal bond pad 17.

Individual focal points 4a, 4b, 4c, 4d, each corresponding to a quarter 3a, 3b, 3c, 3d of the coupling face 3, lie on a same planar surface close to the emitting surface of the LED 11. Each individual focal point is distinct from any other focal point, in the sense that adjacent focal points are distant by a minimal distance $d_y$ 19 and $d_z$ 21. The minimal distances between focus points may be calculated according to the formula provided above.

LED 11 has a rectangle light emitting surface which is positioned opposite coupling face 3 of beam splitter lens 1 is a (not shown) headlamp device.

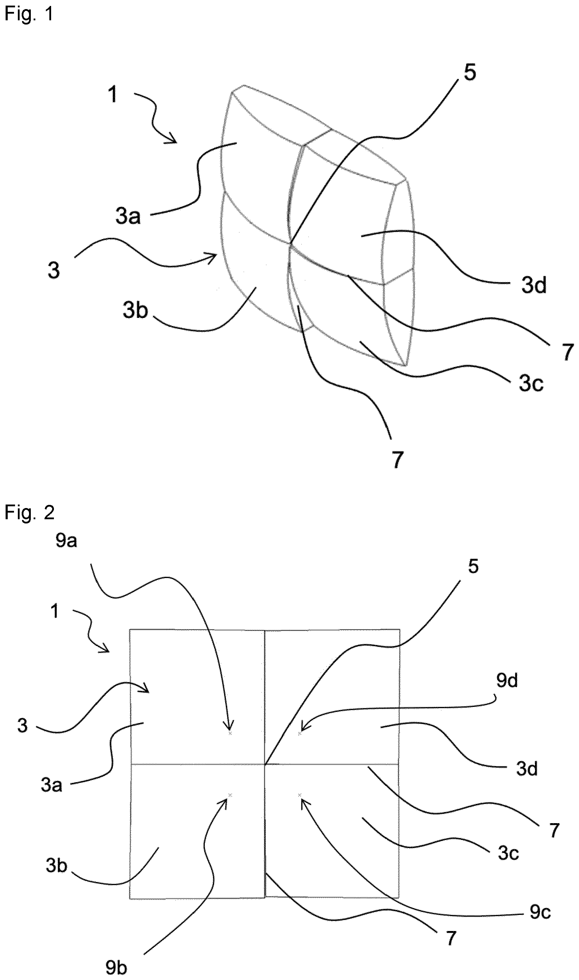

As shown on Fig. 2, in an X, Y, Z coordinate system centred on the centre of the LED 11, the coordinates of the individual focal points depend on the size of the LED 11, the properties of the LED 11 and the possible displacement of the LED 11.

Basically, the centre of LED 11 is aligned on central axis 5 of beam splitter lens 1 and the quarters 3a, 3b, 3c, 3d of beam splitter lens 1 have such a shape that their individual focal points 4a, 4b, 4c, 4d are located in the plane of the emitting surface of LED 11, but not at the centre of LED 11. Said individual focal points are shifted in the Y,Z plane, away from the centre, at distinct locations. Accordingly, there is a distance $d_y$ 19, $d_z$ 21 between any pair of individual focal points, whatever the individual focal points. Considering one dimension L of the light emitting surface, distances $d_y$ 19, $d_z$ 21 are of the same magnitude.

Each surface of a quarter 3a, 3b, 3c, 3d is a coupling surface of simple lens and is created in its local axis system. The resulting surfaces are independent of each other.

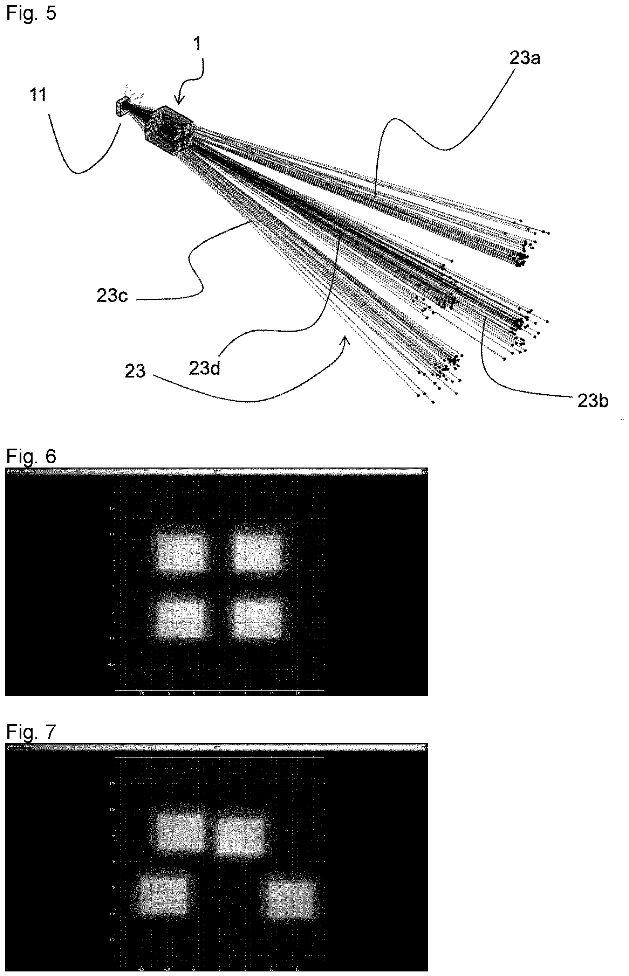

In Fig. 5, one can see a primary cone beam 23 after passing through the beam splitter lens 1. It is divided into four separated beams 23a, 23b, 23c, 23d that do not overlap.

In Fig. 6, the luminance of each beam is consistent and protected from any interference of another beam.

In Fig.7, the beams are asymmetrical. This results from an independent design of each quarter.

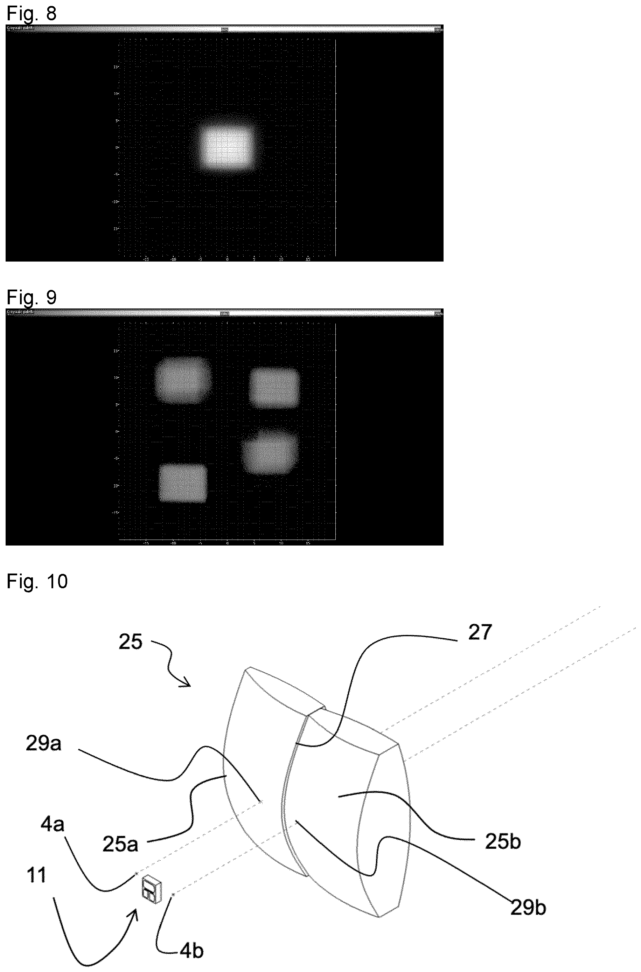

In Fig.8, the four beams are purposely overlapping, each of them having the same spread.

In Fig.9, an asymmetrical spread of the distinct beams results in a decreasing intensity of light from the center to the border of the overall beam.

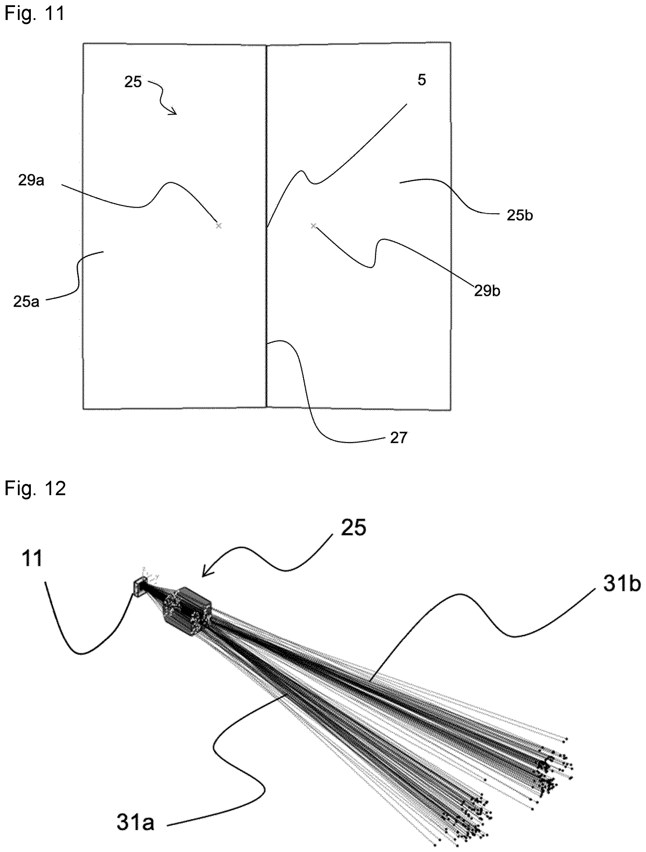

Figures10 and 11 illustrate another embodiment where the beam splitter lens 25 is divided in two halves 25a, 25b, with a boundary 27 in between and two vertices 25a, 25b. Each simple lens has a vertex 29a, 29b on the coupling surface and an individual focal point 4a, 4b.

As shown Fig. 12, the beams 31a, 31b emitted by beam splitter lens 25 are not overlapping. The same combinations as for the beam splitter lens of the first embodiment apply to this second embodiment.

**List of references**

1: ... beam splitter lens
3: ... coupling face
3a, 3b, 3c, 3d: ... quarters
4a, 4b, 4c, 4d: ... individual focal points
5: ... central axis
7: ... quarter boundaries
9a, 9b, 9c, 9d: ... vertices
11: ... LED
13: ... anode bond pad
15: ... cathode bond pad
17: ... thermal bond pad
19: ... $d_y$
21: ... $d_z$
23: ... primary cone beam
23a, 23b, 23c, 23d: ... divisions of primary cone beam 23
25: ... beam splitter lens
25a, 25b: ... halves
27 ... halves boundary
29a, 29b: ... vertices
31a, 31b: ... beams

**Claims**

1. Beam splitter lens (1; 25) for the production of a multi-beam emitter, the beam splitter lens comprising at least two simple lenses (3a, 3b, 3c, 3d; 25a, 25b), each simple lens being able to project a collimated beam (23a, 23b, 23c, 23d; 31a, 31b) from light captured at a focal point defined by the configuration of the simple lens,
   **characterized in that** each simple lens is configured so that it possesses its own individual focal point (4a, 4b, 4c, 4d), which is distinct from the individual focal point of another lens, in the sense that adjacent focal points are distant by a minimal distance (d).

2. Beam splitter lens according to claim 1, wherein the minimal distance ($d_i$) between individual focal points is greater than or equal to 25% of one dimension (L) of the size of the emitting surface.

3. Beam splitter lens according to anyone of the preceding claims, wherein the following formula is used for determining the distance:

$$d_y = \text{SeparationCoeficient}_y \times L_y$$

$$d_z = \text{SeparationCoeficient}_z \times L_z$$

   where:

   $d_y$, respectively $d_z$, is the distance between the individual focal point and the source focal point in dimension Y, respectively Z, expressed in mm;
   SeparationCoeficient$_y$, respectively SeparationCoeficient$_z$ is the scaling factor for dimensions Y, respectively Z, expressed in %;
   $L_y$, respectively $L_z$, is the size of the light-emitting surface in dimension Y, respectively Z, expressed in mm.

4. Beam splitter lens according to anyone of the preceding claims, wherein the beam splitter lens comprises two or four simple lenses (3a, 3b, 3c, 3d; 25a, 25b) with non-symmetrical properties adapted to the production of a collimated beam (23a, 23b, 23c, 23d; 31a, 31b).

5. Beam splitter lens according to the preceding claim, wherein at least one of the simple lenses has a face of an aspherical shape having at least one vertex (9a, 9b, 9c, 9d; 29a, 29b), with said vertex of the aspherical shape located on the face of the simple lens.

6. Beam splitter lens according to anyone of the preceding claims, wherein adjacent beams diverge by an angular spread between ranges from 2-25 degrees.

7. Multi-beam emitter, comprising a light source made having a light emitting surface and a beam splitter lens according to the preceding claims.

8. Vehicle headlamp comprising a multi-beam emitter according to the preceding claim.

Fig. 1

Fig. 2

Fig. 3

Fig. 4

Fig. 5

Fig. 6

Fig. 7

Fig. 8

Fig. 9

Fig. 10

Fig. 11

Fig. 12

## EUROPEAN SEARCH REPORT

**Application Number**

EP 24 21 6503

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2022 106129 A1 (GM GLOBAL TECH OPERATIONS LLC [US]) 20 October 2022 (2022-10-20) * paragraphs [0013] - [0015], [0020]; figures 1-3 * | 1-8 | INV. G02B19/00 F21S41/143 F21S41/20 G02B27/12 |
| X | US 2018/073698 A1 (ORISICH JOHN STEVEN [US] ET AL) 15 March 2018 (2018-03-15) * paragraphs [0099], [0100], [0141] - [0146]; figures 3, 31A-35 * | 1-8 | |
| X | DE 10 2004 043706 A1 (OEC AG [DE]) 13 April 2006 (2006-04-13) * paragraphs [0036] - [0055]; figures 1-3 * | 1-8 | |

TECHNICAL FIELDS SEARCHED (IPC)

G02B
F21S

The present search report has been drawn up for all claims

| Place of search | Date of completion of the search | Examiner |
|---|---|---|
| Munich | 17 April 2025 | Zwerger, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 6503

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2025

| Patent document cited in search report | Publication date | Patent family member(s) | | Publication date |
|---|---|---|---|---|
| DE 102022106129 A1 | 20-10-2022 | CN | 115218157 A | 21-10-2022 |
| | | DE | 102022106129 A1 | 20-10-2022 |
| | | US | 11204147 B1 | 21-12-2021 |
| US 2018073698 A1 | 15-03-2018 | NONE | | |
| DE 102004043706 A1 | 13-04-2006 | DE | 102004043706 A1 | 13-04-2006 |
| | | EP | 1792118 A1 | 06-06-2007 |
| | | WO | 2006027230 A1 | 16-03-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8007154 B2